# EUROPEAN PATENT SPECIFICATION

(11) **EP 1 659 325 B1**
(45) Date of publication and mention of the grant of the patent: **02.01.2013**
(21) Application number: 05380249.2
(22) Date of filing: 14.11.2005
(51) Int. Cl.: F16L 37/092, F16L 19/08

(54) **Gripping ring for pipe joints**
Greifring für Rohrverbindungen
Bague de serrage pour des raccords de tuyaux

(30) Priority: 18.11.2004 ES 200402770
(43) Date of publication of application: 24.05.2006
(73) Proprietor: Genebre, S.A., 08908 L'Hospitalet de Llobregat (Barcelona) (ES)
(72) Inventor: Monterde Fabregat, Lluis, c/o GENEBRE, S.A., 08908 L'Hospitalet de Llobregat (Bar.) (ES)
(74) Representative: Morgades y Manonelles, Juan Antonio

(56) References cited:
- WO-A-01/25667
- DE-U1- 20 313 644
- US-A- 1 888 343
- US-A- 5 833 276
- US-A1- 2004 012 198

## Description

### PUROPOSE OF THE INVENTION

This invention refers to a pipe coupling gripping ring.

### SCOPE OF THE INVENTION

This gripping ring is of the type that is mainly employed in fluid piping plants and forms part of the means of securing the couplings to valves, connectors and other elements in certain piping of the stated plants, in which said valves or others are interposed after cutting the necessary section from same.

### BACKGROUND TO THE INVENTION

The existing rings of said type, such as the ones included in the connectors that are the object of patents WO 01/25667, US 2004/012198, DE 20313644, US 1888343 and US 5833276, are open and present teeth or ribs in their cylindrical inside surface which, in some of these rings, are at a dihedral angle and distributed in three or more circular rows.

WO 01/25667 which represents the closest prior art discloses such a ring having conical opposite outer edges. The rows of teeth are made up of ribs with notches at regular distances. All relevant documents show without exception teeth or ribs bieng orientated in the same direction.

Such a ring presses the conduit on which it has been previously inserted and penetrates, its teeth or ribs into it, causing over time the problem that the conduit is cut off with the subsequent consequences.

### SUMMARY OF THE INVENTION

This problem or inconvenience, together with others that deriving from it, are resolved with the ring of the invention, which is also open, is conical at both outside edges and has its inside cylindrical surface, showing a plurality of teeth distributed into in at least three circular rows arranged at a dihedral angle, the teeth being made up of corresponding ribs with notches at regular distances.

This ring is characterized in that the teeth in the end two rows are convergently orientated towards the inside of said ring with the inner faces of one row parallel to the inner faces of those in the other row and all perpendicular to the axis of the cylindrical inner surface, while the outer faces of all these teeth and the two faces of the teeth in the intermediate row are inclined. This way, all the teeth on the ring sink into the corresponding conduit without ever cutting it.

Secondly, also characteristic is the fact that the depth of the notches which, on the ribs of the cylindrical inner surface of this ring, form the teeth thereof, is less than the height of said ribs, and that the two parts defined in the ring, according to an intermediate plane perpendicular to the axis thereof, are symmetrical, so that it makes no difference which face is threaded first over the corresponding duct.

### DESCRIPTION OF THE DRAWINGS

In the drawings:
Figure 1 is a perspective view of a gripping ring in accordance with the invention.
Figure 2 illustrates a front elevation view of the same.
Figure 3 shows the ring in a side section.
Figure 4 is part of a scale-up of the side section of the ring.
Figure 5 illustrates the longitudinal section of a joint coupling a pipe with a tubular element, together with the means of securing said joint, among which the gripping ring is shown.

### DESCRIPTION OF AN EMBODIMENT

In accordance with the drawings, the illustrated gripping ring (1) is open and shows symmetrically conical, opposite outside edges (2, 3).

On its inside cylindrical surface (4) said ring shows three circular ribs (5) arranged at a dihedral angle, which show along the length of the same and, at regular separations, a succession of notches (6) that arise corresponding teeth (7) on the said ribs.

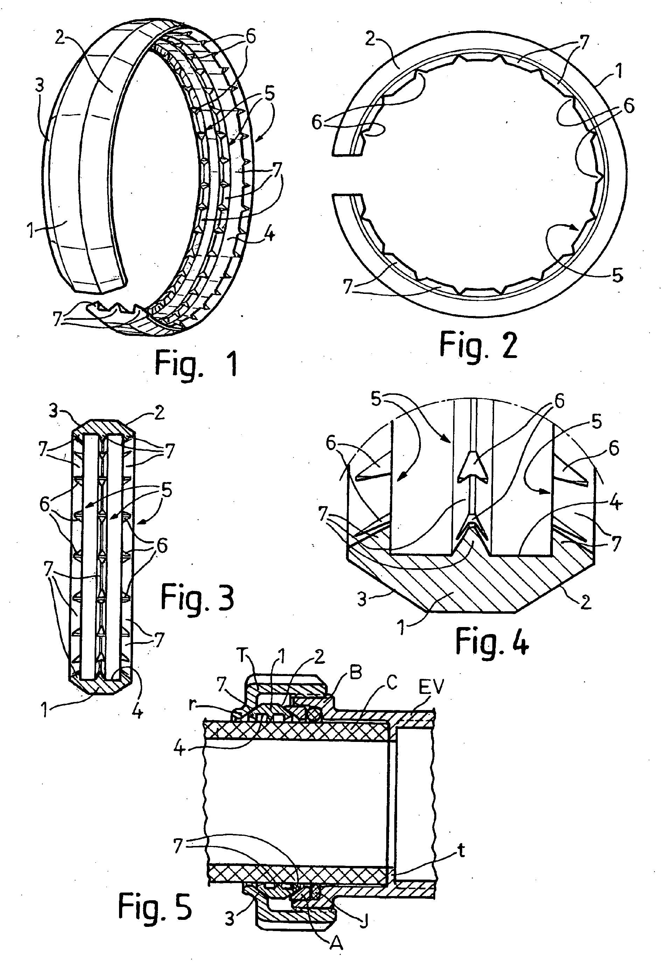

The teeth (7) of the two outside ribs (5) present the dihedral angle with the respective inside faces parallel to each other, the outside ones being inclined, so that both faces of the teeth (7) of the intermediate fillet (5) are inclined (as shown in figure 4).

On connecting, for instance, a valve to a conduit (C) (figure 5), each tubular end (EV) of the former is coupled, via the expanded mouth (B) presented by the latter, over the corresponding end of the said conduit (C), with this end suitably inserted into that of the valve until it meets a stop (t) envisaged in same, so that the securing means can act on the joint (upper part of the mentioned figure 5 shows the joint with said securing means beginning to act and the lower part with the same having already achieved their securing mission).

These means of securing include a nut (T), the gripping ring (1), a washer (A) and an O-ring (J), which are inserted in this order over the duct (C) prior to the latter being joined with the end (EV) of the valve, in order to later displacing the nut (T) towards the expanded mouth (B) of the said valve end and carrying with it ring (1), washer (A) and O-ring (J) towards the inside of the said mouth.

Finally, the nut (T) is threaded on the threaded outer surface of mouth (B) and acting upon the inside slant surface, ending in a rear edge (r) of same, applies against the rear conical surface (3) of ring (1), whose conical surface (2) applies on the conical inside surface of washer (A), which presses the O-ring (J) against the inside of the expanded mouth (B).

At the same time, ring (1) closes over duct (C) with its teeth indenting it, by which action the joint is firmly secured and becomes completely leaktight, without any danger of duct (C) becoming cut off.

## Claims

1. A gripping ring (1) for pipe joints, the gripping ring (1) being open and having conical opposite outside edges (2, 3) and on its cylindrical inside surface (4) a plurality of teeth (7), said teeth being distributed in at least three circular rows arranged at a dihedral angle and said teeth (7) being formed by corresponding ribs (5) with notches (6) being indented in them at regular distances, **characterized in that** the teeth (7) of the two outside rows are convergently orientated towards the inside of the ring, the inside faces of these teeth being parallel to each other and perpendicular to the axis of the cylindrical inside surface (4), whereas the outside faces of these teeth are inclined and both faces of the teeth (7) of the intermediate row are inclined.

2. A gripping ring for pipe joints, according to claim 1, characterize in that the depth of the notches (6) being indented in the ribs (5) is smaller than the height of said ribs (5).

3. A gripping ring for pipe joints, according to previous claims, **characterized in that** the two portions being defined in it by a middle plane being perpendicular to its axis are symmetrical.

## Patentansprüche

1. Spannring (1) für Rohrverbindungen, wobei der Spannring (1) offen ist und einander gegenüberliegende konische Außenkanten (2, 3) aufweist und an seiner zylinderförmigen Innenfläche (4) mit einer Vielzahl von Zähnen (7) versehen ist, welche in mindestens drei kreisförmigen Reihen mit einem V-förmigen Öffnungswinkel angeordnet sind und von entsprechenden Rippen (5) gebildet werden, auf denen in regelmäßigen Abständen (6) Aussparungen eingearbeitet sind, **dadurch gekennzeichnet, dass** die Zähne (7) der beiden Außenreihen konvergent zur Innenseite des Rings gerichtet sind, wobei die Innenseiten dieser Zähne parallel zueinander und senkrecht zur Achse der zylinderförmigen Innenfläche (4) stehen, während die Außenseiten dieser Zähne schräg sind und beide Seiten der Zähne (7) der mittleren Reihe ebenfalls schräg sind.

2. Spannring für Rohrverbindungen (1) nach Anspruch 1, **dadurch gekennzeichnet, dass** die Tiefe der Aussparungen (6), die in die Rippen (5) eingearbeitet sind, kleiner ist als die Höhe der Rippen (5).

3. Spannring für Rohrverbindungen (1) nach den vorhergehenden Ansprüchen, **dadurch gekennzeichnet, dass** die beiden Teile, die durch eine senkrecht zu ihrer Achse angeordnete Mittelebene begrenzt werden, symmetrisch sind.

## Revendications

1. Une bague de serrage (1) pour joints de tuyaux, la bague de serrage (1) étant ouverte et ayant des bords extérieurs opposés coniques (2, 3) et sur sa surface interne cylindrique (4) présente une multitude de dents (7), lesdites dents étant réparties sur les trois dernières rangées circulaires disposées dans un angle dièdre et lesdites dents étant composées de nervures correspondantes (5) avec des entailles (6) qui y sont incisées à des intervalles réguliers, **caractérisée en ce que** les dents (7) des deux rangées extérieures sont orientées de manière convergente vers l'intérieur de la bague, les faces intérieures de ces dents étant parallèles les unes aux autres et perpendiculaires à l'axe de la surface intérieure cylindrique (4), alors que les faces extérieures de ces dents sont inclinées et les deux faces des dents (7) de la rangée intermédiaire sont inclinées.

2. Une bague de serrage (1) pour joints de tuyaux, comme indiqué dans la revendication 1, **caractérisée en ce que** la profondeur des entailles (6) incisées dans les nervures (5) est inférieure à la hauteur de ces nervures (5).

3. Une bague de serrage (1) pour joints de tuyaux, comme indiqué dans les revendications précédentes, **caractérisée en ce que** les deux tronçons définis par un plan moyen perpendiculairement à son axe sont symétriques.
